# EUROPEAN PATENT SPECIFICATION

(11) **EP 2 505 339 B1**
(45) Date of publication and mention of the grant of the patent: **28.12.2016**
(21) Application number: 09843072.1
(22) Date of filing: 24.11.2009
(51) Int. Cl.: B29C 65/38, B65B 1/10, H05B 3/10, H05B 3/20, B29C 65/18, B29C 65/30, B29C 65/22, B29L 31/00, B29C 65/74

(54) **IMPULSE SEALER HEATER COVERED WITH CERAMICS**
KERAMIKBESCHICHTETES HEIZELEMENT FÜR EIN IMPULSSIEGELGERÄT
ÉLÉMENT CHAUFFANT D'UNE MACHINE DE SCELLAGE PAR IMPULSIONS RECOUVERT DE CÉRAMIQUE

(43) Date of publication of application: 03.10.2012
(73) Proprietor: Sakamoto, Atsunobu, Inba-gun, Chiba 270-1423 (JP); Sakamoto, Kazuko, Inba-gun, Chiba 270-1423 (JP); Yamada, Kazukuni, Kyoto 617-0812 (JP)
(72) Inventor: Sakamoto, Atsunobu, Inba-gun, Chiba 270-1423 (JP); Sakamoto, Kazuko, Inba-gun, Chiba 270-1423 (JP); Yamada, Kazukuni, Kyoto 617-0812 (JP)
(74) Representative: Lees, Gregory Alexander
(86) International application number: PCT/JP2009/069793
(87) International publication number: WO 2010/116567

(56) References cited:
- EP-A1- 1 964 781
- EP-A2- 0 154 970
- WO-A1-00/75018
- CH-A- 494 106
- GB-A- 929 809
- JP-A- 1 267 126
- JP-A- 2001 079 949
- JP-A- 2005 007 606
- JP-U- 57 167 004
- US-A- 3 480 505

## Description

### BACKGROUND OF THE DISCLOSURE

### [Field of the Disclosure]

The present disclosure relates to an impulse heat sealer, and in particular, to a heater.

### [Description of the Related Art]

Existing impulse heat sealers including a heater wire having, for example, a length of 20 cm and a width of 2 mm, require a low voltage and a high current such as 20 V and 10 A. Therefore, a heavy transformer is necessary to use such an impulse heat sealer with commercial electric power at 100 V. The inventors have improved an existing strip-shaped heater wire by cutting narrow slits into the wire from both sides of the wire, thereby forming a zigzag shape having a small and uniform width, which is electrically narrow and long. As a result, a high voltage and a low current such as 100 V and 2 A can be used, and an impulse heat sealer can be directly connected to the commercial electric power. Thus, a heavy transformer is not necessary, and a lightweight and energy-saving impulse heat sealer is realized. (See Japanese Patent No. 3943934.)

When an electric current is passed through the heater wire, an electric shock may occur. To prevent this, the impulse heat sealer includes a safety device that interrupts an electric current flowing through the electric wire when a press mechanism is open. However, if the zigzag-shaped portion of the heater wire is stretched or if an end of a broken heater wire protrudes, part of the heater wire may be exposed to the outside from the mouth of the press mechanism even if the press mechanism is closed. If a switch is pressed and the heater wire is energized in this state, a user's hand may contact the heater wire and receive an electric shock.

The inventors have taken measures against this problem by affixing to the heater wire a film that is coated with a sticky agent and that is made of a polyimide resin that can resist a temperature of 600°C. As a result and in particular because the heater wire is fixed in place with the sticky agent that is moved to the heater wire, the zigzag-shaped wire is prevented from stretching and an end of a broken wire is prevented from protruding, and the heater wire is improved. (See Japanese Unexamined Patent Application Publication No. 2005-7606.) However, the film is thermally weak. Because the sealer is not usually used to seal a bag that has a maximal sealable width, parts of the film near ends of the film at which pressure is low tend to rise above the heater wire. The heater wire is frequently overheated because air, which is a thermal insulator, enters such parts and inflates from below the film. As a result, within several months or so, the film becomes burned and charred, and the film is removed from the heater wire when replacing fluoropolymer tape affixed to the film.

It is assumed from this result that the heater wire that is thermally insulated by air and the polyimide resin, which is a thermal insulator, was temporarily heated to a temperature higher than 600°C and the heat deteriorated the polyimide resin. Then, the high-temperature is related to material degradation such as 475°C embrittlement of an iron-chromium alloy from which the heater wire is made, so that using the film is not an effective measure. By increasing the thickness of the film, the life of the film can be increased to some extent. However, a film having a thickness of 60 micrometers, which is the smallest available thickness, considerably impedes heat transfer. Therefore, a sealer using a thick film does not have practical utility.

EP 1964781 discloses a heater for a heat sealer having a thermally insulating ceramic overlay disposed between a heater and a silicone film.

### SUMMARY OF THE INVENTION

In accordance with the present invention, there is provided a heat sealer comprising:
a press mechanism;
a heater attached to a jaw of the press mechanism; and
an electric power circuit connected to the heater, the electric power circuit receiving electric power from an external power source,
wherein the heat sealer clamps and presses an object made of a thermoplastic resin by using the press mechanism, instantaneously heats the heater by passing a high electric current through the heater in a short time, melts the object, and cools and solidifies the object by interrupting the electric current,
wherein the heater includes
(a) a thin thermal-electrical insulator plate that has an appropriate size and thickness and that is superposed on a heat dissipating base or on the jaw that also serves as the heat dissipating base, the heat dissipating base being made of a metal and disposed on the jaw of the press mechanism,
(b) one or more heater wires each of which is a thin metal resistor plate superposed on the thin thermal-electrical insulator plate, each heater wire including an electrode that is connected to the electric power circuit and a heat generating portion having a strip-like shape or a desired shape,
(c) a thermally conductive electrical insulator, which is a ceramic plate, superposed on the heat generating portion, the thermally conductive electrical insulator having a flat surface that closely contacts the heat generating portion, the thermally conductive electrical insulator being an electrical insulator and having a thermal conductivity that is equal to or higher than that of alumina,
(d) a thermal-electrical insulator that covers exposed portions of the heater wires and the electrode, the thermal-electrical insulator surrounding a part of the exposed portions located around the thermally conductive electrical insulator so that the part is electrically and thermally insulated and surrounding a remaining part of the exposed portions so that the remaining part is at least electrically insulated, and
(e) a thin release film superposed constantly or as necessary on the thermally conductive electrical insulator with or without a gap therebetween, and
(f) wherein the elements of the heater described in (a) to (e) are made to closely contact each other and fixed at necessary positions by using an adhesive, a sticky agent, or a physical method.

Only a low voltage electrical current is passed through a heater wire of existing impulse sealers, and it is empirically known that heat is not transferred in a short time to any object placed on the heater wire. Therefore, only a flouropolymer tape is disposed on the heater wire to prevent melted polyethylene or the like from sticking to the heater wire. However, in order to use a transformerless heat sealer having a zigzag-shaped wire not only in countries where the voltage of commercial electric power is 100 V but also in countries where the voltage is in the range of 200 to 240 V, it is necessary to use a cover that does not deteriorate due to heat generated by the heater wire and through which the heat is rapidly transferred to the surface.

A thin ceramic plate that conducts heat but does not conduct electricity (hereinafter referred to as "thermally conductive electrical insulator") is disposed on a heat generating portion of the heater wire. For example, the thin ceramic plate has a thickness of 0.6 mm and is made of an aluminium nitride. The thin ceramic plate is surrounded by a silicone rubber or a glass cloth that does not conduct heat and electricity (hereinafter referred to as "thermal-electrical insulator"), and they are made to closely contact each other and fixed to a heat dissipating base.

The possibility of electric shock is almost entirely eliminated because heat generated by the heater wire is immediately transferred to the thin ceramic plate, which is a thermally conductive electrical insulator, the temperatures of the heater wire and the thin ceramic plate do not become abnormally higher than the operating temperature (150°C), the heater wire is completely covered, and the lives of the heater wire and the ceramic are considerably increased. Moreover, heat generated by the heater wire is rapidly transferred to the surface through the thin plate made of a thermally conductive electrical insulator, and the heater wire is cooled rapidly in a short time after the electric current is turned off and generation of heat is stopped.

### BRIEF DESCRIPTION OF THE DRAWINGS

Fig. 1 is sectional view illustrating an example of a heater and a press mechanism according to an embodiment;
Fig. 2 is a plan view of the heater;
Fig. 3 is a plan view of a heater wire;
Fig. 4 is a sectional view illustrating an example of a rib and a heater;
Fig. 5 is a graph illustrating the temperature of the heater wire and aluminium nitride when the heater wire is generating heat;
Fig. 6 is a sectional view of another example of a thermal-electrical insulator of a heater;
Fig. 7 is a sectional view of a an example of a heater and a heat die having a triangular cross section;
Fig. 8 is a sectional view of an example of a heater reinforcing member that is integrated with a heat die having a triangular cross section;
Fig. 9 is a sectional view of an example of a heater and a heater reinforcing member;
Fig. 10 is a sectional view of another example of a heater and a heater reinforcing member;
Fig. 11 is a sectional view of another example of a heater and a heater reinforcing member;
Fig. 12 is a sectional view of a sealer illustrating an example of an application of a heater reinforcing member;
Fig. 13 is an enlarged plan view illustrating another example a zigzag-shaped heater wire;
Fig. 14 is a plan view illustrating another example a zigzag-shaped heater wire; and
Fig. 15 is a plan view illustrating another example a zigzag-shaped heater wire.

### DESCRIPTION OF THE SIGNS

- 1: jaws of the press mechanism
- 2: a heat dissipating base
- 3: ribs
- 4: sarcon tape
- 5: heater wire
- 6: a thin aluminium nitride plate
- 7: glass cloth tape
- 8: fluoropolymer tape
- 9: heat generating portions of the heater wire
- 10: non-heat generating portions and electrodes
- 11: a soft silicone rubber
- 12: a base fixed to the jaw
- 13: a bag made of a polyethylene film
- 14: slits
- 15: edges of the jaw
- 16: an integrated insulator
- 17: an insulator having a smaller height
- 18: a heat die
- 19: an aluminium plate
- 20: a flat plate made of Invar
- 21: an aluminium plate
- 22: an insulator made of Bakelite
- 23: an insulator made of a PPS resin
- 24: screw

### DETAILED DESCRIPTION OF THE EMBODIMENTS

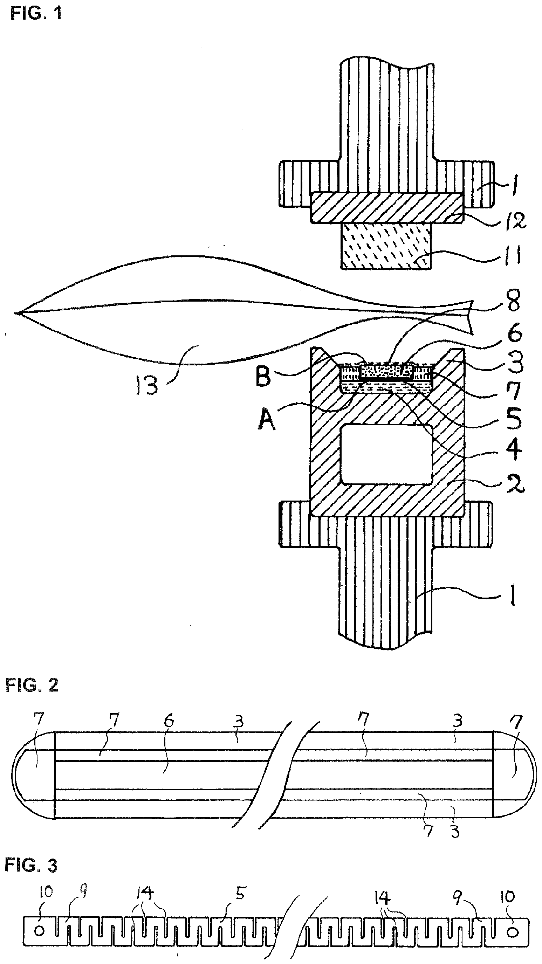

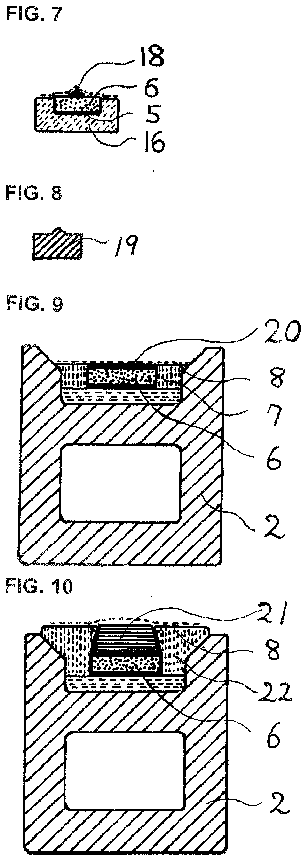

A first embodiment will be described with reference to Figs. 1 to 6 and Figs. 13 to 15. A second embodiment and a third embodiment, which are applications of the first embodiment, will be described with reference to Figs. 7 and 8 and Figs. 9 to 12, respectively.

### First Embodiment

Fig. 1 is sectional view illustrating an example of a heater and a press mechanism in which the heater is mounted according to the first embodiment. A heat dissipating base 2, which is an extruded aluminium pipe having a rectangular cross section, is fixed to one of jaws 1 (partially illustrated in Fig. 1) of the press mechanism. Ribs 3 having a height of 1.7 mm are formed at edges on both sides of the upper surface of the heat dissipating base 2. A piece of Sarcon tape 4 having a thickness of 0.45 mm is affixed to a part of the upper surface of the heat dissipating base 2 between the ribs 3. The piece of Sarcon tape 4 serves as a thermal-electrical insulator that insulates the heat dissipating base 2 from heat. (Sarcon tape, which is manufactured by Fuji Polymer Industries Corporation, is tape composed of a silicone rubber, a glass cloth, and aluminium nitride powder or alumina powder). A heater wire 5 having a zigzag shape is superposed on the piece of Sarcon tape 4. The heater wire 5 is made of an iron-chromium alloy, and has a thickness of 0.1 mm and a width of 2 mm. A thin aluminium nitride plate 6 having a thickness of 0.6 mm and a width of 2 mm is superposed on the heater wire 5. Pieces of glass cloth tape 7 each having a thickness of 0.6 mm and a width of 0.8 mm are disposed on both sides of the thin aluminium nitride plate 6 between the ribs 3. The heater wire 5, the thin aluminium nitride plate 6, and the pieces of glass cloth tape 7 are bonded to each other with an adhesive. A piece of fluoropolymer tape 8 coated with a sticky agent and a thickness of 0.1 mm is affixed to the thin aluminium nitride plate 6.

Referring to Figs. 2 and 3, the heater will be described in plan view. Fig. 2 is a plan view of the heater illustrated in Fig. 1. For ease of understanding, the piece of fluoropolymer tape 8 coated with a sticky agent has not been affixed. Fig. 3 is a plan view of the heater wire 5. The thin aluminium nitride plate 6 has an elongated quadrangular shape having the same size and shape as a heat generating portion 9 of the heater wire 5 having a narrow zigzag shape. The pieces of glass cloth tape 7, each of which is a thermal-electrical insulator having a width of 0.8 mm, are disposed on both sides of the thin aluminium nitride plate 6 in the longitudinal direction between the ribs 3 of the heat dissipating base 2. Non-heat generating portions and electrodes 10 of the heater wire 5 are connected to electrodes of an electric power circuit (not shown). If these portions are exposed to the outside, an electric shock may occur. To prevent this, the pieces of glass cloth tape 7 are disposed as illustrated in Fig. 2, and boundaries between these are bonded by using an adhesive. Thus, parts of the heater that may cause an electric shock if a user touches such a part from the outside are all covered by a ceramic, a glass cloth, or a Sarcon Tape and are fixed by using an adhesive or a sticky agent. Because the piece of fluoropolymer tape 8 is affixed so as to cover these parts, protection against electric shock is further ensured.

The operation and function will be described. As with existing press mechanisms, a base 12 is fixed to the other of the jaws 1 of the press mechanism and a soft silicone rubber 11 having a thickness of 2 mm and a width of 3.4 mm is affixed to the base 12. A bag 13 made of a polyethylene film having a thickness of about 0.05 mm was placed between the jaws 1, clamped, and pressed. When the heater was energized for one second, which was slightly longer than 0.8 seconds in the case where the thin aluminium nitride plate 6 was not present, the bag 13 was properly sealed. Cooling time increased slightly.

Heat generated by the heater wire 5 is rapidly transferred to the thin aluminium nitride plate 6. Therefore, when the thin aluminium nitride plate 6 is heated to a sealable temperature, the temperature of the heater wire 5 is only several degrees higher than that of the sealable temperature. The sealable temperature is in the range of 100 to 150°C. If the width of the bag 13 made of polyethylene is smaller than that of the heater, heat generated at end portions of the heater is not used. However, the heat at the end portions is rapidly transferred toward the middle of the heater. As a result, the temperature of any part of the thin aluminium nitride plate 6 does not exceed 200°C. Some commercial silicone-based adhesives for high-temperature are resistant to a temperature of 250°C in ordinary use. Such an adhesive can be used for a substantially long time and can follow the difference in thermal expansion between components because the adhesive has a certain degree of flexibility.

As illustrated Fig. 3, which is a plan view that is not drawn to scale, the heater wire 5 is made by etching a thin iron-chromium alloy plate having a thickness of 0.1 mm. The heat generating portion 9 is a narrow strip having a width of 2 mm into which slits 14 having a width of about 0.15 mm are alternately formed perpendicular to the sides of the strip. The heater wire 5 itself is formed as a zigzag-shaped wire having a substantially uniform width of about 0.4 mm. The electrodes 10 at the ends of the heater wire 5 are fixed to electrodes (not shown) of the heat dissipating base 2 while pulling the electrodes 10 to a degree to which the heater wire 5 stretches due to thermal expansion. Depending on the shape of the heater wire 5, the electrodes 10 need not be pulled. By doing so, extension and contraction of the heater wire 5 can be neglected.

The length of the heater wire 5, which has a zigzag shape, is electrically thinner and longer than a ribbon wire having the same size. In the example described above, the electrical resistance of the heater wire 5 is 25 Ω while the electrical resistance of a ribbon wire having the same size is 2 Ω. Therefore, an appropriate electric current is obtained by half-wave rectifying commercial electric power of 100 V. Therefore, a transformer need not be used. The slits of the heater wire may be formed in accordance with the used voltage. Even if the width of the zigzag-shaped wire is nonuniform to a certain degree, the thin aluminium nitride plate 6 immediately corrects nonuniformity in heat and enables proper sealing. Therefore, the heater according to the embodiment may be formed not only in a linear shape, but also in a quadrangular or a circular shape to meet a variety of needs. Moreover, the heater may include more than one heater wires.

It is preferable that the thin aluminium nitride plate 6 has the same shape, the same area, and the same thickness as the heat generating portion 9 of the heater wire. However, the temperature of the thin aluminium nitride plate 6 decreases if the area of the thin aluminium nitride plate 6 is made larger than that of the heat source, and the temperature of the thin aluminium nitride plate 6 increases if the thin aluminium nitride plate 6 has a trapezoidal cross section and has a front surface that is smaller than a surface through which heat is received. By taking this into consideration, the shape of the thin aluminium nitride plate 6 may be different from that of the heat generating portion of the heater wire to a certain degree. For example, a heat die having a triangular cross section may be integrally formed with the thin aluminium nitride plate 6. In this case, a surface of the thin aluminium nitride plate 6 opposite to the heater wire has a certain amount of protrusions and recesses. However, as long as a thin aluminium nitride plate has a surface that closely contacts the heater wire and has a function the same as that of the embodiment, such a thin aluminium nitride plate is included in the scope of the claims. The thicker the plate is, the stronger the plate is. However, because a thick plate is expensive and aluminium nitride has very high heat conductivity, a thickness of about 0.6 mm is appropriate.

Even if the thin aluminium nitride plate has a joint or a crack having a width in the range of about 0.1 to 0.2 mm, as described in the specification of a zigzag-shaped heater wire disclosed by the inventors, such a joint or a crack does not influence the sealing performance because heat is diffused by the piece of fluoropolymer tape or a bag itself. Therefore, an arbitrarily long heater can be manufactured by joining short members. In this case, the thin aluminium nitride plate, which has an elongated shape, may be cracked during use. However, even if the plate is cracked, there is no problem as long as fragments are not scattered and holes are not made. Therefore, the thin aluminium nitride plate, the heater wire 5, and the pieces of glass cloth tape 7 on both sides are bonded to each other with an adhesive. A groove may be formed beforehand by using a laser or the like. When a strong force is suddenly applied to the thin aluminium nitride plate, the plate may be cracked along the groove. However, generation of a large number of small fragments or sharp edges is prevented.

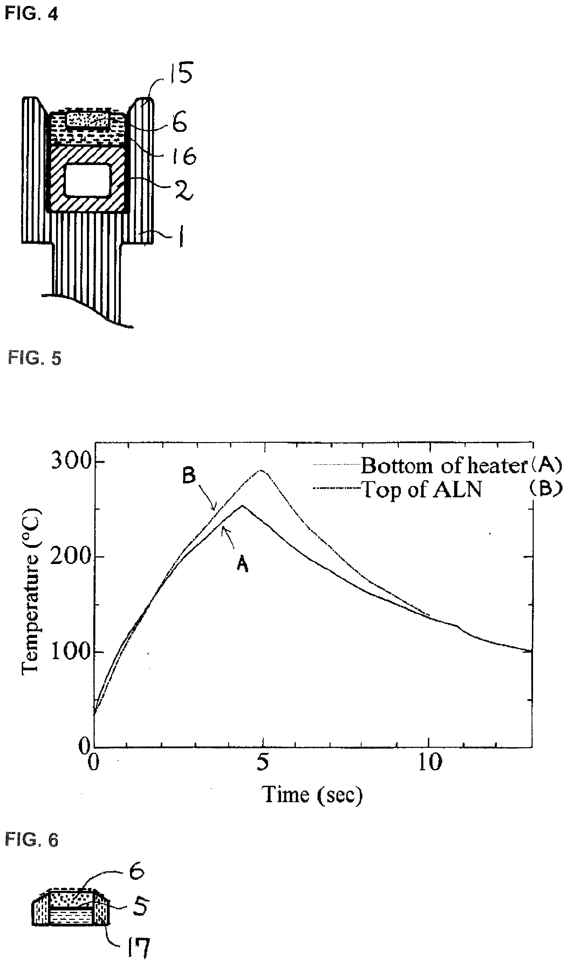

The ribs 3, which are elongated protrusions at the sides of the heat dissipating base, more positively protect the thin aluminium nitride plate and the insulator. The heater may be damaged if the press mechanism is closed if a hard object in a bag has been accidentally moved to the mouth of the bag to be sealed. The ribs 3 serve to prevent such an accident. For example, a handle of a scalpel in a sterilization bag may protrude from the mouth of the bag. The structure illustrated Fig. 1, in which the ribs 3 are formed on the heat dissipating base 2, is convenient for handling the heater independently. However, as illustrated in Fig. 4, which is a sectional view, a structure in which ribs are not provided to the heater and edges 15 of the jaw 1 of the press mechanism protrude when the heater is attached to the jaw 1 also functions in the same way. A single rib that is disposed a side of the heater from which a bag is inserted has a similar function.

Fig. 5 is a graph illustrating heat transfer in the heater wire and the thin aluminium nitride plate. The vertical axis represents temperature, and the horizontal axis represents time. The temperatures of the heater wire and the thin aluminium nitride plate were increased to about 300°C, which was unnecessarily high. Thermocouples having a thin tape-like shape were used as sensors. In Fig. 1, which is a sectional view, a measurement point A was between the bottom surface of the heater wire and the piece of Sarcon tape 4, which is an insulator. A measurement point B was on a surface of the thin aluminium nitride plate 6, which is a thermally conductive electrical insulator. The temperatures were measured when the press mechanism was closed and the heater was pressed by the soft silicone rubber 11. This graph shows that the difference between the temperatures at the point A and the point B is almost negligible when the temperature is in the range of 100°C to 150°C. That is, heat transfer in the thin aluminium nitride plate 6 is sufficiently rapid such that the thin aluminium nitride plate 6 has a temperature substantially the same as that of the surface of the heater wire 5.

In the range of 250°C to 300°C, the peak of the graph for the point A corresponds to a time at which flow of electric current was stopped and heating was stopped. The graph shows a phenomenon that the temperature at the point B increased for nearly 0.5 seconds after that time. This phenomenon occurred because the sensor at the point A was in contact with the piece of Sarcon tape having a high thermal conductivity (0.9 W/m·K) at the bottom of the heater wire and, i.e., a heat-conductive electric insulator, while the sensor at the point B was in contact with the silicone rubber 11 (an ordinary silicone rubber having a low thermal conductivity of 0.16 W/m·K), i.e., a non-heat-conductive electric insulator. This means that the heater wire made of an iron-chromium alloy, which has a low thermal conductivity, decouples heat.

Examples of thermally conductive electrical insulators that function in the same way as the thin aluminium nitride plate include silicon carbide, beryllium oxide, cubic boron nitride (c-BN), and the like. Diamond may be used if cost allows. A ceramic composed of such materials, or a composite material may be used. These ceramics can be used in the same way as the thin aluminium nitride plate described above. Aluminium nitride has a heat conductivity in the range of 150 to 250 W/m·K. Alumina has a heat conductivity of 24 W/m·K, which is the lowest among those of the ceramics described above and about the same as that of an iron-chromium alloy or Nichrome that is the material of the heater wire. These materials are included in the scope of the claims. Alumina can be used, although the sealing performance is lower than that of aluminium nitride when the same amount of heat is generated and the resistance to thermal shock is lower than that of aluminium nitride. Materials having a thermal conductivity lower than that of alumina cannot be used, because such materials cannot absorb all of generated heat and the temperature of the heater wire tends to become abnormally high.

The thermal conductivity of the thermal-electrical insulator that surrounds the thermally conductive electrical insulator is also important. To cool an impulse sealer, it is necessary to rapidly dissipate heat and transfer heat to the aluminium base. However, a thermal-electrical insulator having excessively high heat conductivity cannot be used. Steatite, which is a representative of porcelain, has a thermal conductivity of 2.5 W/m·K. If a thin plate of steatite having a thickness of 0.6 mm is used, heat is transferred through the thin plate to the heat dissipating base at the bottom. As a result, when heating is performed by supplying an electric current having an ordinary strength, sufficient amount of heat is not transferred to the surface through the thin aluminium nitride plate. When a Sarcon Tape having a thermal conductivity of 0.9 W/m·K is used, heat is transferred to the surface and sealing is successfully performed. This value may be an upper limit of the thermal conductivity of the insulator, although it may depend on the amount of applied electric power.

On the other hand, there is no lower limit to the thermal conductivity of the insulator that can be used. An insulator made of a glass cloth (0.23 W/m·K) or a silicone rubber having a low thermal conductivity can be used, because heat is dissipated into the atmosphere and the temperature decreases from the sealable temperature to a non-shrinking temperature. However, when the heater is continuously used, the temperature of the heater is increased due to accumulated heat. Therefore, in this case, it is necessary to control the electric current more precisely as the temperature rises. Therefore, it is necessary to select whether to use an existing sealer, which uses an insulator having relatively high heat conductivity and naturally dissipates heat to the heat dissipating base, or a new type of sealer, which uses an insulator having a low thermal conductivity and performs precise temperature control. An example of the latter is the third embodiment.

With respect to heat dissipation, whether or not to separate the insulator on the surface from the insulator at the bottom is not important. Therefore, for ease of manufacturing, an integrated insulator 16 having an angular U-shaped cross section as illustrated Fig. 4 or 7 may be used. Such an integrated insulator can be easily made from, for example, Sarcon Tape, which includes a silicone rubber, or a porous cordierite (a type of porcelain). Therefore, a case where an insulator that is affixed to the bottom and an insulator that surrounds the surface are made at the same time (i.e., integrally formed) is included in the scope of the claims. On the contrary, a plurality of insulators may be stacked. Alternatively, a method of filling a gap with a silicone-based insulator may be used. In this case, the insulator also serves as an adhesive.

To be specific, referring to Fig. 2, the function of the pieces of glass cloth tape 7 that cover the electrodes 10 and parts of the heater wire that do not generate heat is electrical insulation or prevention of electric shock, and the function of the pieces of glass cloth tape 7 that are adjacent to and in contact with the sides of the thin aluminium nitride plate 6 is heat insulation. These functions are different from each other. A glass cloth has both of these functions. In contrast, a steatite, which is electrically insulating but has excessively high heat conductivity, cannot be used at the positions adjacent to the sides of the thin aluminium nitride plate 6.

Regarding electrical insulation, which is a property of preventing flow of electric current, there are national standards or laws that specify breakdown voltage, flame retardancy, thickness, strength, and the like. It is necessary to meat such standards. A piece of glass tape and a silicone rubber having a thickness of 0.6 mm meet the standard of double insulation. A thin aluminium nitride plate having a thickness of 0.6 mm and a piece of Sarcon Tape having a thickness of 0.45 mm meet the standard for heat dissipater of electrical components. However, to be specific, the standards of the country in which the heater is used are to be met. Therefore, the expression in the claims that an insulator has an appropriate thickness may mean that the thickness satisfies not only the standards related to heat but also the standards related to electricity.

The height of the pieces of glass cloth tape 7 on the surface is also important. The pieces of glass cloth tape 7 of Fig. 1 and the integrated insulator 16 illustrated in Fig. 4 each have an upper surface that is parallel to and at the same height as the surface of the thin aluminium nitride plate 6 or at a height equal to or 0.1 mm to 0.2 mm lower than that of the surface of the thin aluminium nitride plate 6. In this case, when a bag or a film is clamped and pressed between the upper surface and the silicone rubber 11 of the press mechanism 1 as with existing sealers, the bag or the film can be sealed without generating creases so that the bag or the film has a good commercial quality. On the contrary, if the height of the upper surface of the thermal-electrical insulator is low, a bag or a film cannot be clamped between the upper surface and the silicone rubber 11, so that the boundary of sealed part may be creased and an edge cut may occur if the heating time is long. However, because this does not influence the sealing strength when heating is performed in an ordinary way, the insulator 17 having a small height as illustrated in Fig. 6 is included in the scope of the claims.

### [Second Embodiment]

As illustrated in Fig. 7, which is a sectional view, a heat die 18 made of aluminium nitride or aluminium is disposed on the thin aluminium nitride plate 6. The heat die 18 has a triangular cross section and, for example, has a height of 0.3 mm, a bottom surface having a width of 0.6 mm, and a length the same as that of the heater. A piece of fluoropolymer tape is applied to the heat die 18. Thus, temporary sealing and heat cutting can be performed. Because the heat die 18 is electrically insulated by the thin aluminium nitride plate, not only a ceramic but also a metal having a high heat conductivity can be used as the material of the heat die 18. One of the surfaces of the heat die 18 may have a three-dimensional shape suitable for the purpose of sealing. The heater can be used to seal an object that is too thick to be sealed by using existing sealers, such as a vinyl tube for blood transfusion. Moreover, for example, a date or the like can be stamped on an object while sealing the object by using a heating die having the shape of a number.

The heat cut heater described above is useful when used carefully. However, if pressure is applied rapidly, or if the heat die has a triangular cross section having a large height and a short base, the thin aluminium nitride plate may be cracked. A thick aluminium nitride plate is not easily cracked, and the thicker the plate is, the stronger the plate is. However, the cost of a thick plate is high. Therefore, as illustrated in Fig. 8, which is a sectional view, an aluminium plate 19 is made by integrally forming a member having a triangular cross section having a height of 0.3 mm on an aluminium plate having a thickness of 1 mm and a width of 2 mm. The aluminium plate 19 is placed on the thin aluminium nitride plate 6 and covered with a piece of fluoropolymer tape. Thus, a load applied to the peak of the protrusion in the middle of the plate is first received by the aluminium plate 19, and is transmitted to the thin aluminium nitride plate 6 below the aluminium plate 19 in a distributed manner, so that cracking of the thin aluminium nitride plate 6 does not occur. Even if the thin aluminium nitride plate 6 is cracked, fragments are not scattered to the outside, and the heater wire below the thin aluminium nitride plate 6 is not exposed to the outside. Although the second embodiment is for temporary sealing, a method of reinforcing a thin aluminium nitride plate heater for permanent sealing will be described in the third embodiment.

### [Third Embodiment]

Fig. 9 is a sectional view of the heat dissipating base 2 illustrated in Fig. 1 and a heater disposed on the heat dissipating base 2. A flat plate 20 made of Invar (a nickel steel alloy) is disposed between the thin aluminium nitride plate 6 and the piece of fluoropolymer tape 8. The flat plate 20 has a thickness of 0.1 mm, a width of 2 mm, and a length the same as that of the thin aluminium nitride plate 6. The flat plate 20, the thin aluminium nitride plate 6, and the pieces of glass cloth tape 7 on both sides are fixed with an adhesive. The thermal expansion coefficient of Invar is substantially equal to zero at room temperature, but the thermal expansion coefficient is higher at a temperature of about 150°C. Therefore, if a silicone adhesive is appropriately used, the adhesive can follow the displacement between the flat plate 20 and the thin aluminium nitride plate 6. The thermal expansion coefficient of the flat plate 20 can be made the same as that of the thin aluminium nitride plate 6 by changing the composition of iron and nickel in Invar. The flat plate 20 does not distribute a load, because the flat plate 20 is thin. However, even if the thin aluminium nitride plate 6 is cracked, fragments do not penetrate through the flat plate 20, which is made of an iron alloy. In this example, the flat plate 20 is a ribbon rather than a plate. However, the flat plate 20 may have a larger thickness.

Fig. 10 is a sectional view of a heater including, instead of the Invar plate, an aluminium plate 21 having a thickness of 1 mm and a width of 2 mm placed on the thin aluminium nitride plate 6. Aluminium has a high thermal expansion coefficient. Therefore, for example, the aluminium plate 21 has a slightly trapezoidal shape, insulators 22 on the sides of the aluminium plate 21 are made of Bakelite having a high heat resistance, and the trapezoidal aluminium plate 21 is fixed by being slid and pressed between the insulators 22. Because the aluminium plate 21 is thick and is not easily deformed, if the aluminium plate 21 receives an uneven pressure, the pressure is applied to the thin aluminium nitride plate 6 in a distributed manner, so that the thin aluminium nitride plate 6 is not cracked during ordinary use.

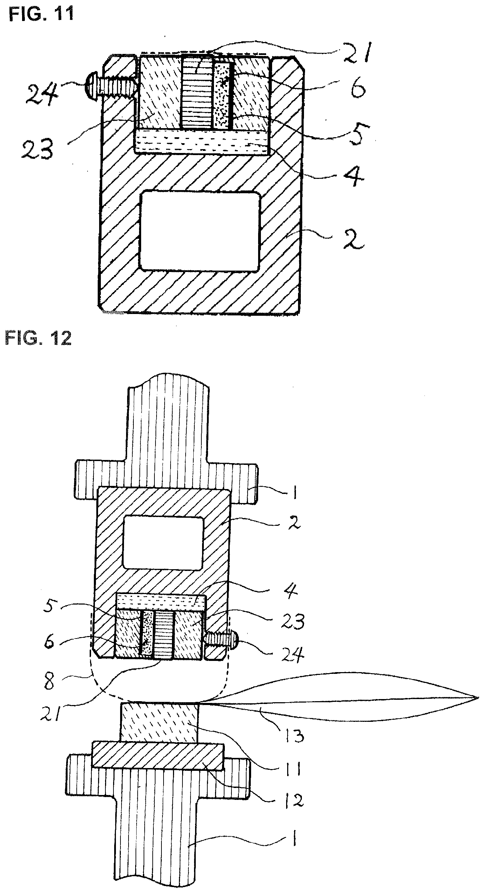

Fig. 11 illustrates a heater including a heater unit that is similar to that illustrated in Fig. 10 and that is placed on the heat dissipating base 2 in an orientation rotated by 90 degrees. The heater unit includes an aluminium plate 21, the heater wire 5, and the thin aluminium nitride plate 6 that are fixed with an insulator 23 made of a PPS resin. A screw 24 is a physical device that makes the elements of the heater closely contact each other and fixes the elements. The heater has a function the same as that of the sealer of Fig. 10. A pressure that is applied to the heater is received by the aluminium plate 21, the piece of Sarcon tape 4, and the heat dissipating base 2. Therefore, the pressure is not applied to the thin aluminium nitride plate 6 at all.

As can be seen from these three examples, metal is the material that is suitable for the following purposes: to prevent the thin aluminium nitride plate 6 from being cracked by distributing pressure applied to the thin aluminium nitride plate 6; to prevent fragments from being scattered to the outside even if the thin aluminium nitride plate 6 is cracked; and to provide heat to an object. Metal can be used because the thin aluminium nitride plate 6 serves as an electrical insulator. Invar and aluminium plate described above are interchangeable with any metal as long as the metal has an appropriate thermal expansion coefficient. Even if the thermal conductivity of the metal is lower, the thermal conductivity of the metal is hundreds of times higher than that of a polyimide resin or a fluoropolymer. Moreover, because heat generated by the heater wire is temporarily accumulated in the thin aluminium nitride plate, the temperatures of the heater wire and the thin aluminium nitride plate do not increase abnormally. That is, the metal plates in these three examples serve to reinforce the structure and the function of a heater having a thin aluminium nitride plate as a main element. Therefore, the plate or the ribbon will be referred to as a heater reinforcing member. In reality, no metal satisfies all of the requirements of low thermal expansion coefficient, high thermal conductivity, and high strength as a die. However, the first two of these can be compensated for by using an appropriate structure, the strength is important when selecting the metal. The metal may be selected in accordance with the purpose of the sealer (i.e., what is to be sealed in what manner), the operability, the continuous service time, the life, the cost, and the like. Besides metals, a carbon fiber, a carbon nanotube, and composite materials including a carbon fiber or a carbon nanotube and aluminium or epoxy resin or the like are suitable. Such materials will be collectively referred to as a carbon composite.

The heating time of the heaters illustrated in Figs. 10 and 11 is relatively long because the heaters include a large heater reinforcing member. Fig. 12 illustrates a method of taking advantage of this drawback. The heater of Fig. 11 is attached to one of the jaws 1 of the press mechanism at an upper position. As illustrated in Fig. 12, ends of a piece of fluoropolymer tape 8 are fixed so that a space is formed in a middle part. The heater is not energized while the press mechanism is open, and is energized when the press mechanism is closed. The method of using the sealer is as follows. The bag 13 is clamped between the jaws 1 of the press mechanism. The bag 13 is melted due to heat received from the aluminium plate 21. When melting of the bag 13 is detected on the basis of temperature, the heater is de-energized and a certain signal is issued. At this time, the jaws 1 are slightly opened. That is, the heater that is being cooled but still has a high temperature is separated from the bag 13. Thus, the bag 13, which is located between the silicone rubber 11 and the piece of fluoropolymer tape 8, is rapidly cooled by air. On the other hand, the temperature of the heater does not decrease substantially because the thin aluminium nitride plate 6 and the aluminium plate 21 are surrounded by the thermal-electrical insulator. When the jaws 1 are closed during the next operation, the temperature of the heater reaches a set temperature in a short time. The temperature of the aluminium plate 21 is immediately detected by using a thin thermocouple (not shown) as a temperature sensor, and the temperature is controlled.

As with impulse sealers, the sealer is repeatedly heated when energized and cooled when de-energized. The way that the sealer is cooled and the speed of sealing operation are the same as those of existing hot plate sealers. However, a component corresponding to a hot plate is covered with an insulator and only a small part is exposed to the outside, so that the risk of burn injury is small, the amount of radiant heat is small, and the sealer is highly energy efficient. That is, the heater reinforcing member is used not only to protect the thin aluminium nitride plate but also to increase the volume and thermal capacity of the heater. However, excessively high thermal capacity is not appropriate. As long as a user does not feel that the heating time from the room temperature to the set temperature, which may be two or three seconds or more, is long, the thermal capacity is appropriate. During continuous use, the heater can be used with almost no waiting time because heat generated in the previous operation remains in the heater.

In Fig. 12, the heater illustrated in Fig. 11, which is the heater unit illustrated in Fig. 10 rotated by 90 degrees, is turned upside down. However, the relationship between adjacent elements and the way heat is transferred do not change. Therefore, the term "on" or "superposed on" in the claims only refers to the relationship between adjacent elements in a certain direction. The heat die 18 illustrated in Fig. 7 and the aluminium plate 19 of integrated type illustrated in Fig. 8, which are attached with a simple structure, are also included in the heater reinforcing member because they are used in contact with the thin aluminium nitride plate 6 and increase the performance of the heater. Therefore, although at least one of the surfaces of the heater reinforcing member is a flat surface that contacts the thin aluminium nitride plate, the other surface may have a three-dimensional shape having a triangular cross section, a U-shaped cross section, or a shape like a number, which is required to function as a heat die. Even if the heater reinforcing member has such a shape, the heater reinforcing member will be referred to as a "plate" because the heater reinforcing member has an elongated bar-like shape.

In existing impulse sealers, the material of a heat dissipating base may be aluminium, copper, or an aluminium-copper alloy. In the heater according to the embodiment, the heater is covered with an insulator having low heat conductivity, so that heat dissipation effect is reduced. Therefore, the heat dissipating base functions only as a base or a reinforcing plate, so that the material of the heat dissipating base may be iron, which has a high strength. However, as long as heat is transferred therethrough, the term "heat dissipating base" is also used for such a member. When the heater according to the embodiment is surrounded by the heat dissipating base, the heater has optimal strength and ease of handling. As illustrated in Figs. 6 and 7, which are sectional views of the heaters, as long as the thermal-electrical insulators 16 and 17, the thin aluminium nitride plate 6, and the heater wire 5 are fixed to each other with an adhesive to form a unit (heater unit), the heater unit can be independently handled as a replaceable heater, so that such a heater unit is included in the scope of the claims.

Because existing heater wires stretch and contract, when a piece of fluoropolymer tape is affixed to the heater wire by using a sticky agent, small creases are formed on the piece of tape during use. Therefore, a wide piece of tape that is not coated with a sticky agent is used, and the piece of tape is fixed by mechanically fixing the edges of the piece of tape. On the other hand, because the heater according to the embodiment stretches and contracts only negligibly, it is sufficient that a piece of fluoropolymer tape coated with a sticky agent be simply affixed. For the heater illustrated in Figs. 10 and 11, the existing method of fixing a piece of tape may be used, because the heater reinforcing member moves. However, as illustrated Fig. 12, a piece of tape coated with a sticky agent only at the edges may be used, because the temperature of the heater does not become abnormally high and it is not necessary to replace the piece of tape frequently.

The term "fluoropolymer tape" may mean tape having a substrate made of a glass cloth or the like. Replaceability of the tape need not be considered, because the temperature of the heater according to the embodiment does not become abnormally high. Therefore, for example, a thin film may be formed and strongly baked on the surface of the thermally conductive electrical insulator or the heater reinforcing member. In this case, a silicone rubber may be used as the material of the thin film. Fluoropolymer tape, silicone rubber, and an application film made of such a material will be collectively referred to as a release film. The thermal conductivity of a release film made of a fluoropolymer or a silicone rubber is very low, i.e., conducts only a small amount of heat. Heat is conducted when the thickness of the release film is as thin as about 0.1 mm. The thinner the thickness of the release film is, the larger the amount of conducted heat is. Omitting the release film is the best. Laminate films having a surface made of nylon, paper, or nonwoven fabric do not melt and do not adhere to the heater. Therefore, if the heater is used only for sealing such films, the release film is not necessary. Therefore, a heater that does not include a release film is included in the scope of the claims.

The sealer illustrated in Fig. 12 is suitable for sealing tea leaf bags, because the sealer has a strong pressing force. In this case, the release film is not necessary, because the surface of a tea leaf bag is made of paper or nylon. By applying a silicone rubber having a thickness in the range of, for example, 0.3 to 0.5 mm to the surface of the aluminium plate 21, the difference in the thicknesses of a bag due to gazette folding or back lining, i.e., unevenness due to the difference between a two-ply portion and a four-ply portion can be adjusted, and sealing is more properly performed. A heat die having small teeth may be attached to an end of the heater reinforcing member. A heater described above may be also be disposed on the other of the jaws 1 of the press mechanism, and a bag having a large thickness, such as a tea leaf bag, may be heated while pressing the bag from above and below. Therefore, the term "a heater" in the claims may mean a plurality of heaters.

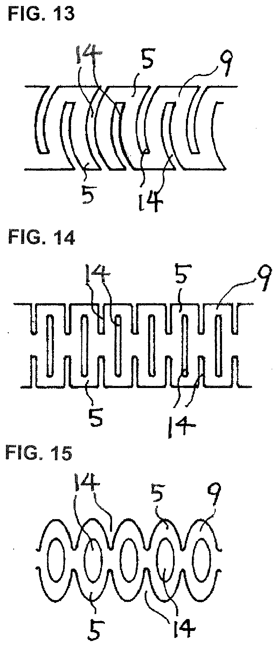

A heater wire according to the embodiment may have a zigzag shape different from that illustrated in Fig. 3. As long as the slits cross the longitudinal direction of the heater wire, movement of the heater wire in the longitudinal direction can be absorbed to some extent. Therefore, slits that are not perpendicular to the longitudinal direction, such as slits that extend diagonally or arc-shaped slits illustrated in Fig. 13 have the same effect. Heater wires illustrated in Figs. 14 and 15 can be used. These wires can be regarded as modifications of the zigzag-shaped wire illustrated in Fig. 3, because each of these wires can be divided into two zigzag-shaped wires by cutting the wires along the center line. However, slits in the heater wire of Fig. 15 are too large, and it takes a long time and a large amount of heat to fill the gaps with heat. Moreover, because the width of the wire is not uniform, excessive heat is generated in narrow parts of the wire. That is, the heater wire may become overheated. In order to perform smooth heating, it is preferable that the slits be as small as possible and the width of the wire be uniform.

When the heater wire is a flexible zigzag-shaped wire as illustrated in Fig. 3, extension and contraction of the heater wire is suppressed by using an adhesive. Therefore, in this case, a heater wire having an extremely small thickness can be produced. Such a wire may be made by affixing an extremely thin plate having a thickness in the range of 0.09 to 0.01 mm to a thermal-electrical insulator, such as a polyimide resin film or a piece of glass cloth tape, and then by etching the plate. The thinner the heater wire is, the higher the electrical resistance is, and heater wire can be connected to an external power source having a higher voltage. Although the zigzag-shaped wire has a small thickness in this case, because the wire is made of a metal, a considerably high current can be passed through the wire as compared with a heater wire that is a ceramic thin plate on which an oxide or the like is baked. Moreover the wire is not cut due to cracking of a ceramic or the like. With this method, the heater is made by superposing and affixing the elements, and then forming a zigzag shape. The order of processing is opposite to that described in the claims. Therefore, the temporal order is not essential for the scope of the claims.

Not only a zigzag-shaped wire but also a general ribbon wire may be covered by a thermally conductive electrical insulator, and the same advantage can be obtained. A ceramic such as aluminium nitride has a low thermal expansion efficient. Therefore, a metal having a low thermal expansion coefficient, such as Invar, is suitable as the material of the heater wire. In the case of a long sealer having a length in the range of 2 m to 3 m, a voltage applied to the heater wire is in the range of 200 V to 300 V. Such a heater wire can be used by securely insulating the heater. Alternatively, a heater having a length of 3 m may be formed by seamlessly joining three heater wires each having a length of 1 m and a voltage of 100 V may be successively applied to each of the heater wires. The heater wire can be protected when sealing a bag containing water or a corrosive liquid.

A ribbon-shaped heater wire cannot be used as it is, because the thermal expansion coefficient of such a heater wire is high. The same applies to the heater reinforcing member, which is usually made of a metal. Displacement due to thermal expansion can be neglected if the length of the sealer is small, but the displacement cannot be neglected if the length of the sealer is large. However, as describe above, this problem can be solved by using a structure that allows displacement or a structure in which a gap having a width of about 0.1 mm at room temperature is formed and the gap disappears as the heater is heated and stretched. Instead of making a thermally conductive electrical insulator independently, the thermally conductive electrical insulator may be integrally formed with a material having a high thermal expansion coefficient. For example, if the thermally conductive electrical insulator is made of a diamond like carbon (DLC), a thin layer of DLC may be formed on the surface of the iron alloy heater wire, or a thin layer of DLC may be formed on the surfaces of the heater wire and the aluminium plate, which is a heater reinforcing member. Among other ceramics, an alumina film on the aluminium plate may be used. Although only a thin film can be formed at present, if an aluminium nitride layer having a sufficient thickness can be formed on the aluminium plate, aluminium nitride may be used. Therefore, the term "a thermally conductive electrical insulator" in the claims may mean a plurality of insulators of the same kind or of different kinds.

A metal resistor plate used as the heater wire may be made of any material that is usually used for a heater wire, such as an iron-chromium alloy, Nichrome, and tungsten. The silicone rubber 11 disposed on the other of the jaws of the press mechanism may be made of a fluorocarbon rubber. If the operating temperature is low, another synthetic rubber may be used. These rubbers will be collectively referred to as a heat resistant rubber.

A sealer according to the embodiment is lightweight and a used can easily use the sealer by holding sealer with his/her hand. Therefore, the sealer may include only the heater side. In this case, although the sealer does not have a heat resistant rubber, it is necessary to affix a heat resistant rubber to a base against which the sealer is pressed. Therefore, a press mechanism in which a user holds the heater and seals a bag placed on the base, i.e., a press mechanism including a human body, is included in the scope of the claims.

### INDUSTRIAL APPLICABILITY

Electrical insulation is semipermanently secured, because the heater wire and the electrode are completely covered with an aluminium nitride plate or a glass cloth that is strong and is not easily cracked. Thus, by using a zigzag-shaped heater wire that matches a power supply voltage, a safe and transformerless impulse sealer that can be used in countries where the voltage of commercial electric power is as high as in the range of 200 to 240 V can be produced. As a result, a heavy transformer made of iron and copper is not necessary.

A device for fixing the release film is not necessary, because the thin aluminium nitride plate used as the cover stretches and contracts only negligibly. Therefore, by using the thin aluminium nitride plate in combination with the zigzag-shaped heater wire, as in the case where the zigzag-shaped wire is independently used, a mechanism for stretching the heater wire is not necessary, so that the structure of the sealer is considerably simplified.

The heater wire and the piece of fluoropolymer tape can be used for a long time because heat is rapidly transferred through the thermally conductive electrical insulator, so that a part having an abnormally high temperature is not generated and the maintenance interval is increased.

The sealer can be used for variety of purposes other than packaging, such as for sealing a polyethylene bag containing excrements during caregiving, because the sealer is simple, lightweight, maintenance-free, and durable.

Existing heater wires, which are exposed to the outside, may corrode when the heater wire is used to seal a bag containing pickles including water or acid liquid or used in an acidic atmosphere in a factory. A heater according to the embodiment has a high corrosion resistance, because the bag can be almost completely sealed.

By using an appropriate heater reinforcing member, the sealer according to the embodiment has a pressing force larger than that of existing sealers. Therefore, tea leaf bags and gazette bags can be easily sealed. By disposing a heat die having a triangular cross section or having a shape of a number or the like on the heater or integrally forming such a heat die with the heater, new functions such as sealing of a thick tube for blood transfusion or stamping of a date can be performed.

By using a heater reinforcing member having an appropriate size and a thermal-electrical insulator having a low heat conductivity and by allowing precise temperature control, an impulse heat sealer of a hot-plate type that can be immediately used after being energized, that has a high operability, that is energy efficient, high-speed, and safe is realized.

## Claims

1. A heat sealer comprising:
a press mechanism;
a heater attached to a jaw (1) of the press mechanism; and
an electric power circuit connected to the heater, the electric power circuit receiving electric power from an external power source,
wherein the heat sealer clamps and presses an object made of a thermoplastic resin by using the press mechanism, instantaneously heats the heater by passing a high electric current through the heater in a short time, melts the object, and cools and solidifies the object by interrupting the electric current,
wherein the heater includes
(a) a thin thermal-electrical insulator plate (4) that has an appropriate size and thickness and that is superposed on a heat dissipating base (2) or on the jaw that also serves as the heat dissipating base, the heat dissipating base being made of a metal and disposed on the jaw of the press mechanism,
(b) one or more heater wires (5) each of which is a thin metal resistor plate superposed on the thin thermal-electrical insulator plate, each heater wire including an electrode (10) that is connected to the electric power circuit and a heat generating portion (9) having a strip-like shape or a desired shape,
(c) a thermally conductive electrical insulator (6), which is a ceramic plate, superposed on the heat generating portion, the thermally conductive electrical insulator having a flat surface that closely contacts the heat generating portion, the thermally conductive electrical insulator being an electrical insulator and having a thermal conductivity that is equal to or higher than that of alumina,
(d) a thermal-electrical insulator (7) that covers exposed portions of the heater wires and the electrode, the thermal-electrical insulator surrounding a part of the exposed portions located around the thermally conductive electrical insulator so that the part is electrically and thermally insulated and surrounding a remaining part of the exposed portions so that the remaining part is at least electrically insulated, and
(e) a thin release film (8) superposed constantly or as necessary on the thermally conductive electrical insulator with or without a gap therebetween, and
(f) wherein the elements of the heater described in (a) to (e) are made to closely contact each other and fixed at necessary positions by using an adhesive, a sticky agent, or a physical method.

2. The heat sealer according to Claim 1,
wherein the heat generating portion of each heater wire that is the thin metal plate resistor plate has slits that cross a longitudinal direction, so that the heater wire has a shape that is thin and long as a path of electricity and that suppresses extension and contraction in the longitudinal direction.

3. The heat sealer according to Claim 1, further comprising:
a plate or ribbon (20;21) (hereinafter referred to as a heater reinforcing member) disposed between the thermally conductive electrical insulator and the release film so as to be in close contact with the thermally conductive electrical insulator, the heater reinforcing member having a first surface and a second surface, the first surface being a flat surface that closely contacts an upper surface of the thermally conductive electrical insulator, the second surface being a flat surface or a three-dimensional surface that is suitable for sealing an object, the heater reinforcing member being made of a metal or a carbon composite having an appropriate strength,
wherein the heater reinforcing member is surrounded by a heat insulator or a thermal-electrical insulator as necessary and fixed.

4. The heat sealer according to Claim 1,
wherein the thermally conductive electrical insulator is made of aluminium nitride, silicon carbide, or a ceramic including aluminium nitride and silicon carbide as main components.

## Patentansprüche

1. Ein Heißsiegelgerät, umfassend:
einen Pressmechanismus;
ein Heizkörper, der an einer Backe (1) von dem Pressmechanismus befestigt ist; und
eine elektrische Leistungsschaltung, die mit dem Heizkörper verbunden ist, wobei die elektrische Leistungsschaltung elektrische Leistung von einer externen Energieversorgung empfängt,
wobei das Heißsiegelgerät ein aus einem thermoplastischen Harz gemachtes Objekt unter Verwendung des Pressmechanismus klemmt und presst, den Heizkörper durch Hindurchleiten eines hohen elektrischen Stroms durch den Heizkörper in einer kurzen Zeit sofort erhitzt, das Objekt aufschmilzt und das Objekt durch Unterbrechen des elektrischen Stromes kühlt und erhärtet,
wobei der Heizkörper umfasst:
(a) eine dünne thermoelektrische Isolierplatte (4), die eine angemessene Größe und Dicke hat und die auf einer Hitzeableitungsbasis (2) oder auf der Backe, die auch als die Hitzeableitungsbasis fungiert, überlagert ist, wobei die Hitzeableitungsbasis aus einem Metall gemacht ist und auf der Backe von dem Pressmechanismus angeordnet ist,
(b) ein oder mehrere Heizkörperdrähte (5), von denen jeder eine dünne Metallwiderstandsplatte ist, die auf der dünnen thermoelektrischen Isolierplatte überlagert ist, wobei jeder Heizkörperdraht eine Elektrode (10), die mit der elektrischen Leistungsschaltung verbunden ist, und einen Hitzeerzeugungsabschnitt (9) mit einer streifenartigen Form oder einer gewünschten Form umfasst,
(c) einen thermisch leitenden elektrischen Isolator (6), der eine Keramikplatte ist, die auf dem Hitzeerzeugungsabschnitt überlagert ist, wobei der thermisch leitende elektrische Isolator eine flache Oberfläche hat, die den Hitzeerzeugungsabschnitt eng kontaktiert, wobei der thermisch leitende elektrische Isolator ein elektrischer Isolator ist und eine thermische Leitfähigkeit hat, die gleich oder höher als die von Tonerde ist,
(d) ein thermoelektrischer Isolator (7), der exponierte Abschnitte von den Heizkörperdrähten und der Elektrode abdeckt, wobei der thermoelektrische Isolator einen Teil von den exponierten Abschnitten umgibt, die um den thermisch leitenden elektrischen Isolator herum angeordnet sind, so dass der Teil elektrisch und thermisch isoliert ist, und einen verbleibenden Teil von den exponierten Abschnitten umgibt, so dass der verbleibende Teil wenigstens elektrisch isoliert ist, und
(e) eine dünne Trennfolie (8), die ständig oder nach Bedarf auf dem thermisch leitenden elektrischen Isolator mit oder ohne einen Spalt dazwischen überlagert ist, und
(f) wobei die Elemente von dem in (a) bis (e) beschriebenen Heizkörper dazu gemacht sind, um einander eng zu kontaktieren, und an notwendigen Positionen unter Verwendung eines Klebstoffs, eines klebrigen Mittels oder eines physikalischen Verfahrens fixiert sind.

2. Das Heißsiegelgerät nach Anspruch 1, wobei der Hitzeerzeugungsabschnitt von jedem Heizkörperdraht, der die dünne Metallplattenwiderstandsplatte ist, Schlitze hat, die eine Längsrichtung kreuzen, so dass der Heizkörperdraht eine Form hat, die dünn und lang wie ein Weg des elektrischen Stroms ist und die eine Erweiterung und Kontraktion in der Längsrichtung unterdrückt.

3. Das Heißsiegelgerät nach Anspruch 1, weiter umfassend:
eine Platte oder Band (20; 21) (im Folgenden als ein Heizkörperverstärkungselement bezeichnet), die/das zwischen dem thermisch leitenden elektrischen Isolator und der Trennfolie angeordnet ist, um in engem Kontakt mit dem thermisch leitenden elektrischen Isolator zu sein, wobei das Heizkörperverstärkungselement eine erste Oberfläche und eine zweite Oberfläche hat, wobei die erste Oberfläche eine flache Oberfläche ist, die eine Oberseite von dem thermisch leitenden elektrischen Isolator eng kontaktiert, die zweite Oberfläche eine flache Oberfläche oder eine dreidimensionale Oberfläche ist, die zum Abdichten eines Objekts geeignet ist, wobei das Heizkörperverstärkungselement aus einem Metall oder einem Kohlenstoffverbundwerkstoff mit einer angemessenen Stäke gemacht ist,
wobei das Heizkörperverstärkungselement nach Bedarf von einem Hitzeisolator oder einem thermoelektrischen Isolator umgeben und fixiert ist.

4. Das Heißsiegelgerät nach Anspruch 1, wobei der thermisch leitende elektrische Isolator aus Aluminiumnitrid, Siliziumcarbid oder einer Keramik, die Aluminiumnitrid und Siliziumcarbid als Hauptkomponenten umfasst, gemacht ist.

## Revendications

1. Dispositif de thermoscellage comprenant :
un mécanisme de presse ;
un moyen de chauffage fixé à une mâchoire (1) du mécanisme de presse ; et
un circuit d'alimentation électrique relié au moyen de chauffage, le circuit d'alimentation électrique recevant de l'énergie électrique en provenance d'une source d'alimentation externe,
dans lequel le dispositif de thermoscellage pince et applique une pression sur un objet constitué d'une résine thermoplastique en utilisant le mécanisme de presse, chauffe instantanément le moyen de chauffage en faisant passer un courant électrique élevé à travers le moyen de chauffage dans un court laps de temps, fait fondre l'objet, et refroidit et solidifie l'objet en interrompant le courant électrique,
dans lequel le moyen de chauffage comprend
(a) une plaque d'isolation thermique-électrique mince (4) qui a une taille et une épaisseur appropriées et qui est superposée sur une base de dissipation de chaleur (2) ou sur la mâchoire qui sert également de base de dissipation de chaleur, la base de dissipation de chaleur étant constituée d'un métal et disposée sur la mâchoire du mécanisme de presse,
(b) un ou plusieurs câbles de chauffage (5), dont chacun est une plaque de résistance métallique mince superposée sur la plaque d'isolation thermique-électrique, chaque câble de chauffage comprenant une électrode (10) qui est reliée au circuit d'alimentation électrique et une portion de génération de chaleur (9) ayant une forme de type bande ou une forme souhaitée,
(c) un isolant électrique conducteur thermiquement (6), qui est une plaque en céramique, superposée sur la portion de génération de chaleur, l'isolant électrique conducteur thermiquement ayant une surface plane en contact étroit avec la portion de génération de chaleur, l'isolant électrique conducteur thermiquement étant un isolant électrique et ayant une conductivité thermique qui est égale ou supérieure à celle de l'alumine,
(d) un isolant thermique-électrique (7) qui recouvre les parties exposées des câbles de chauffage et l'électrode, l'isolant thermique-électrique entourant une partie des portions exposées situées autour de l'isolant électrique conducteur thermiquement de sorte que la partie est électriquement et thermiquement isolée et entourant une partie restante des parties exposées de sorte que la partie restante est au moins isolée électriquement, et
(e) un film mince détachable (8) superposée en permanence ou selon le besoin sur l'isolant électrique conducteur thermiquement, avec ou sans interstice entre eux, et
(f) dans lequel les organes du moyen de chauffage décrit en (a) à (e) sont faits pour être en contact étroit les uns avec les autres et fixés dans des positions nécessaires en utilisant un adhésif, un agent collant, ou un procédé physique.

2. Dispositif de thermoscellage selon la revendication 1,
dans lequel la portion de génération de chaleur de chaque câble de chauffage qui est la plaque de résistance de la plaque métallique mince comporte des fentes qui croisent une direction longitudinale, de sorte que le câble de chauffage a une forme qui est mince et longue en tant que chemin d'électricité et qui supprime l'extension et la contraction dans la direction longitudinale.

3. Dispositif de thermoscellage selon la revendication 1, comprenant en outre :
une plaque ou un ruban (20 ; 21) (ci-après désigné comme un organe de renforcement du moyen de chauffage) disposé entre l'isolant électrique conducteur thermiquement et le film détachable de manière à être en contact étroit avec l'isolant électrique conducteur thermiquement, l'organe de renforcement du moyen de chauffage ayant une première surface et une seconde surface, la première surface étant une surface plane en contact étroit avec une surface supérieure de l'isolant électrique conducteur thermiquement, la seconde surface étant une surface plane ou une surface tridimensionnelle qui est adaptée à sceller un objet, l'organe de renforcement du moyen de chauffage étant constitué d'un métal ou d'un composite de carbone ayant une résistance appropriée,
dans lequel l'organe de renforcement du moyen de chauffage est entouré d'un isolant thermique ou d'un isolant thermique-électrique le cas échéant et fixe.

4. Dispositif de thermoscellage selon la revendication 1,
dans lequel l'isolant électrique conducteur thermiquement est constitué de nitrure d'aluminium, de carbure de silicium, ou d'une céramique comprenant du nitrure d'aluminium et du carbure de silicium comme principaux composants.
